(19) Europäisches Patentamt
European Patent Office
Office européen des brevets

(11) Veröffentlichungsnummer: **0 084 293**
**B1**

(12) # EUROPÄISCHE PATENTSCHRIFT

(45) Veröffentlichungstag der Patentschrift: **14.01.87**

(51) Int. Cl.⁴: **A 01 D 34/66**

(21) Anmeldenummer: **82810555.1**

(22) Anmeldetag: **20.12.82**

(54) **Vorrichtung zum Verhüten des Verstopfens, beziehungsweise zum Abbauen von Erd- und Pflanzenmassen an einem Scheibenmäher.**

(30) Priorität: **29.12.81 DE 3151770**

(43) Veröffentlichungstag der Anmeldung: **27.07.83 Patentblatt 83/30**

(45) Bekanntmachung des Hinweises auf die Patenterteilung: **14.01.87 Patentblatt 87/3**

(84) Benannte Vertragsstaaten: **AT BE CH FR GB IT LI NL**

(56) Entgegenhaltungen:
**BE-A-724 271**
**DE-A-2 645 358**
**GB-A-1 154 333**

(73) Patentinhaber: **Müller, Paul E., Badenerstrasse 859, CH- 8048 Zürich (CH)**

(72) Erfinder: **Müller, Paul E., Badenerstrasse 859, CH- 8048 Zürich (CH)**

(74) Vertreter: **Feldmann, Clarence Paul, c/o Patentanwaltsbüro FELDMANN AG Postfach Kanalstrasse 17, CH- 8152 Glattbrugg (CH)**

EP 0 084 293 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1987

**Beschreibung**

Die vorliegende Erfindung betrifft eine Vorrichtung zum Verhüten eines Verstopfens, beziehungsweise zum Abbau einer Schicht aus Erd- und Pflanzenmassen an einem Scheibenmäher gemäß dem Oberbegriff des Anspruches 1.

Der kritische Bereich, wo sich eine Schicht aus Erd- und Pflanzenmassen aufbaut, liegt vor allem im Ueberschnittbereich der Messer zweier benachbarter Schneiderotoren.

Aus dem Stand der Technik sind bisher lediglich verschiedene Vorrichtungen an Scheibenmäher bekannt, die einen Schutz des Getriebegehäuses gegen Steinschlag darstellen aber ein Verstopfen durch Erd- und Pflanzenmassen nicht verhüten können. So zeigt die BE-A 724 271 ein über die Vorderkante des Getriebegehäuse gezogenes und daran festgeschraubtes Blech, welches solche Steinschlagschäden verhüten soll.

Sowohl von der Form, wie auch von der Anordnung her ist dieses Blech jedoch nicht geeignet ein Verstopfen zu verhüten oder sich ansammelnde Erd- und Pflanzenmassen abzubauen. Von der Form her ist die Vorrichtung nicht geeignet, weil lediglich eine nach oben und hinten geneigte Fläche ab der Mitte der Gehäusehöhe vorgesehen ist, so dass an der unteren Hälfte sich Erd- und Pflanzenmassen aufbauen können und von der Anordnung her vermag es Verstopfungen nicht zu vermeiden, weil es zu weit hinten, dass heisst direkt am Getriebegehäuse angeordnet ist und somit die Messer die sich aufbauenden Erd- und Pflanzenmassen nicht mehr abzubauen vermögen.

Auch die Wirkung des direkt auf das Getriebegehäuse des Scheibenmähers gemäss DE-A-26 45 358 angebrachte Plättchen genügt nicht zum Abbauen von sich ansammelnder Erd- und Pflanzenmassen im Ueberschnittbereich.

Die DE-A-31 49 887 zeigt einem Scheibenmäher mit einer im Ueberschnittbereich angeordneten, gleitschuhartigen Abstreifvorrichtung. Diese Vorrichtung besteht aus einem Abstreifer der sich zwischen zwei benachbarten Gleitschuhen und Steinschutzelementen erstreckt, und fest mit dem Getriebegehäuse verbunden ist. Dank seiner keilartigen Form kann dieser Abstreifer in einem gewissen Masse verhüten, dass Erd- und Pflanzenmassen am Getriebegehäuse hängen bleiben. Unter gewissen Arbeitsbedingungen reicht die Wirkung dieses Abstreifers jedoch nicht.

Die GB-A-1.154.333 schlägt vor, im Ueberschnittbereich nach vorne gerichtete nach oben gebogene Zinken am Getriebegehäuse anzubringen, die verhüten sollen, dass Steine zwischen die Rotorscheiben gelangen. Es dürfte klar sein, dass solche Zinken eher Erd- und Pflanzenmassen sammeln als sie zu entfernen.

Aufgabe der Erfindung soll es sein, die bekannte Vorrichtung so weiter auszubilden, dass sie bei allen Arbeitsbedingungen das Verstopfen verhüten, bzw. sich im Ueberschnittbereich ansammelnde Erd- und Pflanzenmassen abbauen kann.

Diese Aufgabe wird erfindungsgemäss dadurch gelöst, dass dem Abstreif- und Abweiselement eine Reinigungsvorrichtung zugeordnet ist, die den vorderen Bereich des Abstreif- und Abweiselement reinigt, oder, dass das Abstreif- und Abweiselement beweglich mit dem Getriebegehäuse verbunden ist.

Zur besseren Verständlichkeit ist in der Zeichnung zuerst ein Scheibenmäher in verschiedenen Ansichten dargestellt und prinzipiell in der nachfolgenden Beschreibung erläutert. Die verschiedenen, zahlreichen Ausführungsbeispiele sind danach rein schematisch gezeichnet.

In der Zeichnung zeigt:

Figur 1 eine Ansicht eines Scheibenmähers gemäss Stand der Technik von vorne

Figur 2 denselben in der Aufsicht (ohne Aufhängung und Getriebe) und

Figur 3 stellt die Ansicht des Scheibenmähers von unten dar.

Figur 4 zeigt ein bekanntes Abstreif- und Abweiselement, das mit dem Getriebegehäuse integriert ist, ohne Reinigungsvorrichtung in Seitenansich und in

Figur 5 im Schnitt.

Fig. 6 und 8 zeigen erfindungsgemässe Abstreif- und Abweiselemente mit Pressluftzuleitungen und Austrittsdüsen beziehungsweise beweglichen Kolben oder Leisten.

Fig. 7 und 9 Die Ausführungen zeigen starr mit dem Getriebe verbundene Abstreif- und Abweiselemente mit mechanisch betriebenen Reinigungsorganen, während in den Beispielen gemäss den

Fig. 10-13 von den Abstreif- und Abweiselementen getrennte Reinigungsorgane gezeigt sind, sowie pneumatische oder hydraulische Reinigungselemente.

Fig. 14-19 zeigen schliesslich Ausführungen bei denen die Abstreif- und Abweiselemente vor dem Getriebegehäuse bewegt werden.

Zur Verständlichkeit der später nur noch schematisch dargestellten Ausführungsbeispielen des Erfindungsgegenstandes wird vorerst ein handelsüblicher Scheibenmäher beschrieben.

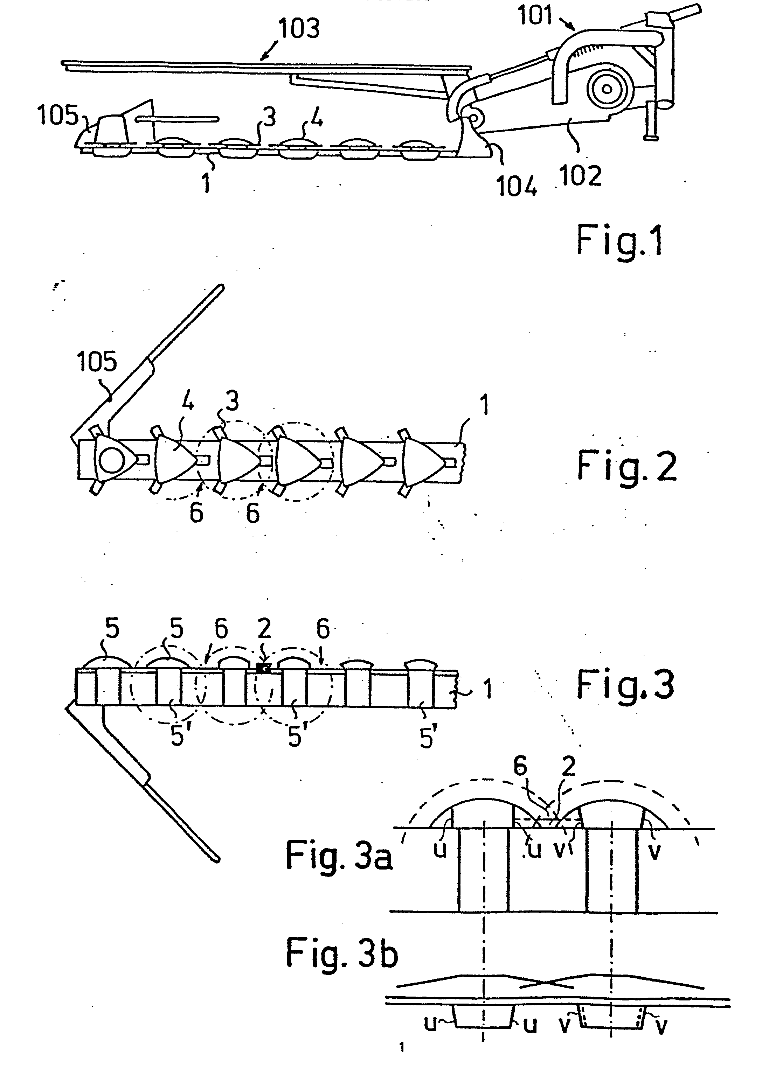

In Figur 1 ist der beschriebene Scheibenmäher in der Gesamtansicht gezeigt. Der Scheibenmäher ist als Ausleger für eine landwirtschaftliche Zugmaschine, z.B. einen Traktor, konzipiert. Der Scheibenmäher als solcher kann natürlich auch an einen Mähknickzetter oder an eine andere Landmaschine angebaut werden. Das Traggestell 101 des Scheibenmähers ist mit der hydraulische Hebe-Vorrichtung des Traktors verbunden. Ueber eine Zapfwelle wird das Getriebe, zum Beispiel ein Riemengetriebe 102, angetrieben. Der Antrieb der Rotoren erfolgt über ein Winkelgetriebe 104 und über das im balkenförmigen Getriebegehäuse 1 gelagerte sogenannte Schneidwerkgetriebe. Das Getriebegehäuse 1 wird in einem gewissen Abstand von einer Art Rost, der Balkenschutzvorrichtung 103, abgedeckt. An dem, dem Winkelgetriebe 104 gegenüberliegenden Ende des Getriebegehäuses 1 ist ein Schwadblech 105 angeordnet.

In Figur 2 ist eine Ansicht des Getriebegehäuses 1 von oben dargestellt, wobei die nicht erfindungswesentlichen Teile, das Traggestell 101, das Riemen- 102 und das Winkelgetriebe 104, sowie die Balkenschutzvorrichtung 103, weggelassen sind.

Man erkennt deutlich die über dem Getriebegehäuse 1 angeordneten Rotorscheiben 4, die hier beispielsweise eine dreieckige Grundform mit gerundeten Seiten haben. Ueber die Ecken der Rotorscheiben 4 ragen Messer 3 radial hinaus. Die relative Winkellage der Rotorscheiben bleibt durch die Zahnräder der im Getriebegehäuse 1 angeordneten Schneidwerkgetriebe immer gleich. Der Schneidebereich der Messer 3 zweier benachbarter Rotoren überschneidet sich. Dieser Bereich wird Ueberschnittbereich 6 genannt. Bezüglich dem Aufbau einer Schicht aus Erd- und Pflanzengut auf dem Getriebegehäuse ist dieser Bereich besonders kritisch.

Die Figur 3 zeigt schliesslich den gleichen Teil des Scheibenmähers wie in Figur 2, mit den gleichen Weglassungen, in der Ansicht von unten. Am Getriebegehäuse 1 sind Gleitschuhe 5' montiert, die in Bewegungsrichtung des Scheibenmähers vorne in einen Steinschutz 5 münden. Der Ueberschnittbereich 6 liegt jeweils zwischen zwei Steinschutzen 5. Hier sind die erfindungsgemässen Abstreif- und Abweiselemente 2 (der Deutlichkeit halber ist nur ein einziges Abstreif- und Abweiselement eingezeichnet) angeordnet.

Unter Zuhilfenahme der nun vorgängig beschriebenen Figuren 1-5 sind die nachfolgenden beschriebenen, schematischen Darstellungen der Figuren 6-19 leicht verständlich.

Das Wesen der Erfindung ist es, den Aufbau einer Schicht von Erde und Pflanzengut im Ueberschnittbereich der Messer 3 am Getriebegehäuse 1 zu vermeiden. Hierzu dienen einerseits speziell ausgebildete Abstreif- und Abweiselemente 2 und andererseits Reinigungsorgane, die später noch beschrieben werden. Das Abstreif- und Abweiselement erfüllt zudem noch die Aufgabe, das Getriebegehäuse 1 vor einem Schlag durch ein verbogenes Messer 3 zu schützen.

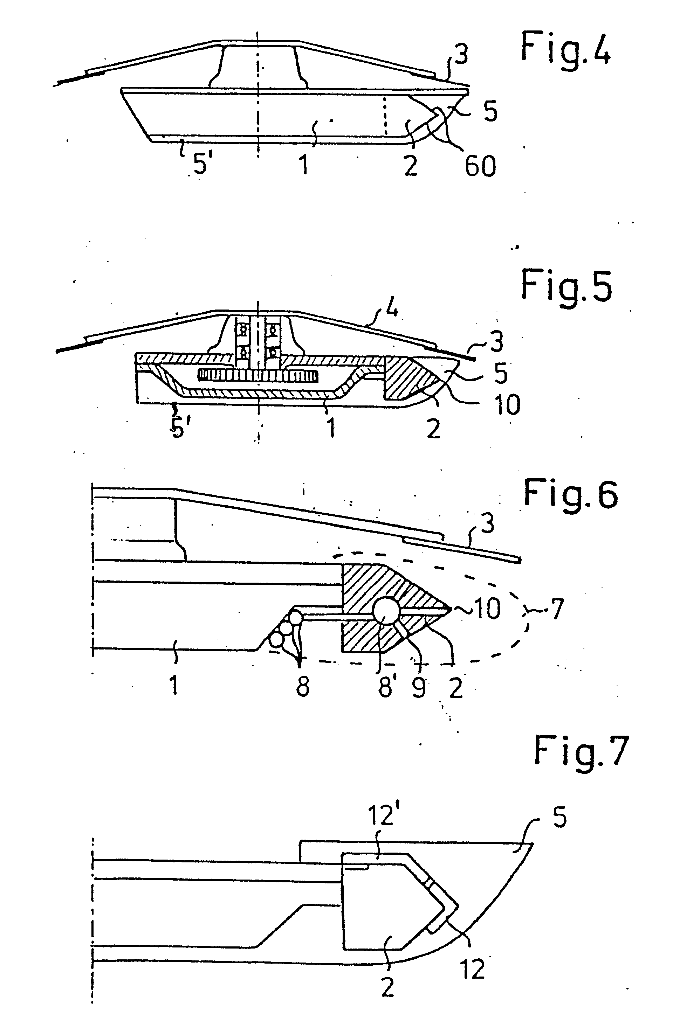

Figur 4 zeigt ein einfaches mit dem Getriebegehäuse 1 integriert verbundenes Abstreif- und Abweiselement 2 ohne Reinigungsvorrichtung. Das Abweiselement hat beispielsweise die Form eines Keiles, wobei von der Spitze 10 je eine Fläche 60 schräg nach oben und eine schräg nach unten hinten zum Getriebegehäuse 1 verläuft. Auf den Scheibenmäher auftreffende Erde und Pflanzengut wird somit durch die schrägen Flächen 60 über oder unter dem Getriebegehäuse 1 hindurch geleitet.

Ein nach unten verbogenes Messer 3 trifft somit auf das Abstreif- und Abweiselement 2, das beispielsweise aus gehärtetem Stahl hergestellt ist, und wird von diesem zurück gebogen oder bricht ab.

In der Figur 5 ist ein Schnitt durch das Getriebegehäuse 1 und durch die Antriebswelle eines Rotors 4 dargestellt. Das Abstreif- und Abweiselement 2 ist starr mit dem Getriebegehäuse 1 verbunden. Seitlich neben dem Abstreifund Abweiselement 2 erkennt man den Steinschutz 5, der in den Gleitschuh 5' übergeht.

Figur 6 zeigt ein Abstreif- und Reinigungselement mit einer Reinigungsvorrichtung. Im oder entlang dem Getriebegehäuse 1 verläuft mindestens eine Druckleitung 8, von der Abzweigungen in Kanäle 8' in das Abstreif- und Abweiselement 2 führen. Der Kanal 8' verzweigt sich im Element 2 in eine oder mehrere Düsen 9. Ein Kompressor im Traktor, oder ein im Mähwerk eingebauter Kompressor liefert die erforderliche Druckluft, oder setzt Wasser unter Druck, womit stossweise oder kontinuierlich eine gegebenfalls auf der Vorderseite des Elementes 2 gebildete Schicht aus Erde und Pflanzengut abgestossen wird.

Die sich gegebenfalls bildende Schicht 7 aus Erde und Pflanzengut kann auf viele weitere Arten mittels Reinigungsorganen abgebaut werden. Einige dieser Arten sind im nachfolgenden beschrieben.

Wesentliche Aufgabe der Reinigungsorgane ist nicht, die Abstreif- und Abweiselemente vollständig zu säubern, sondern vielmehr zu verhindern, dass sich eine Schicht aufbaut, die eine Brücke zwischen zwei Steinschutzen 5 bildet und dadurch die Schneidfunktion der Rotoren beeinflusst.

In Figur 7 wird daher ein Reinigungsorgan vorgeschlagen, das die Form einer Winkelleiste 12 hat. Die Winkelleiste 12 liegt formschlüssig an der Vorderkante 10 des Abweiselementes 2 an. Ueber ein nicht dargestelltes Gestänge oder über Zugkabel lässt sich das Element quer zur Fahrtrichtung des Scheibenmähers bewegen. Auf gleiche Art kann auch auf der Oberseite des Abstreif- und Abweiselementes ein zweites abgewinkeltes Reinigungsorgan 12' hin und her bewegt werden. In der Ruhestellung würde dieses Organ 12' im Bereich des Steinschutzes 5 liegen.

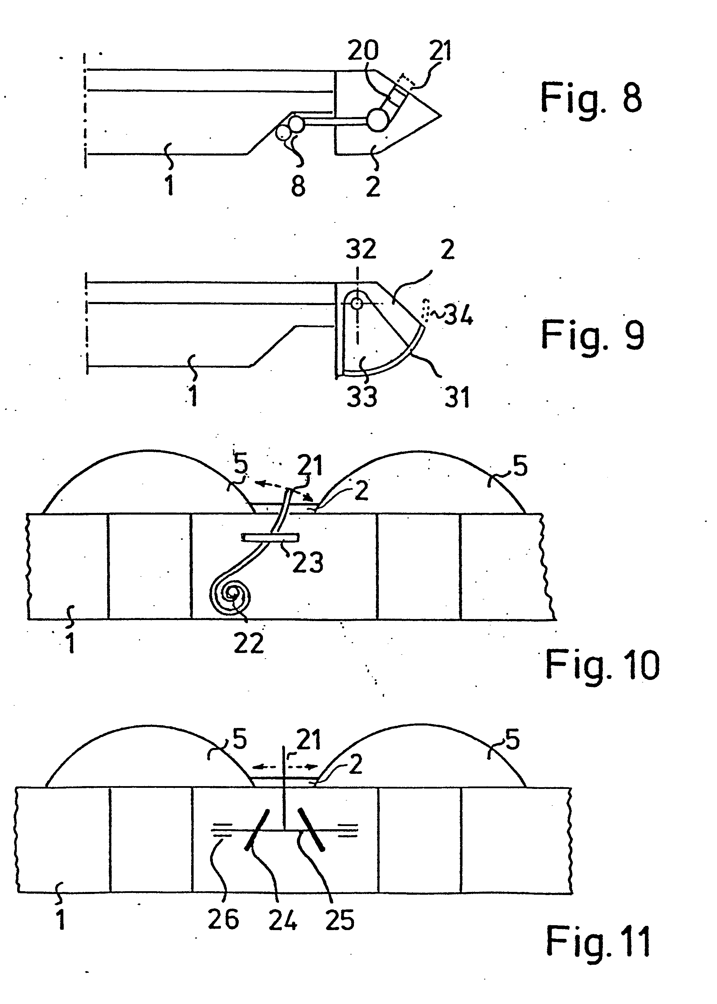

Die sich eventuell aufbauende Schicht aus Erde- und Pflanzengut lässt sich aber auch mit einem im Abstreif- und Abweiselement eingebauten Kolben 20 abstossen, wie dies Figur 8 zeigt. Dazu sind wiederum eine oder mehrere Druckleitungen 8 erforderlich, durch welche das Druckmedium Luft, Wasser, Oel und so weiter, zum Kolben, der in der Ruhestellung völlig innerhalb des Bereiches des Steinschutzres liegt, geführt wird. Der Kolben 20 kann aber auch auf eine Leiste 21 wirken, die die Breite des Abstreif- und Abweiselementes 2 hat und in der Ruhestellung bündig mit der Oberfläche des Abstreif- und Abweiselementes ist.

Am keilförmigen Abstreif- und Abweiselement 2 gemäss der Figur 9 ist die untere, schräge Fläche kreisbogenförmig gewölbt. Ueber dieser Fläche liegt ein gleichartig geformtes Reinigungsorgan 31. Dieses Organ 31 lässt sich ähnlich einem Visier um eine Welle 32 schwenken. Hierzu sind die Reinigungsorgane mittels segmentartigen Armen 33 mit der Welle 32 verbunden. Beim Schwenken stösst das vordere Ende 34 des Reinigungsorganes 31 die Schicht aus Erde- und Pflanzengut nach oben, so dass diese teilweise in den Wirkungsbereich der Messer kommt und von diesen weggeschleudert wird. Danach kehrt das Reinigungsorgan wieder in seine Ausgangsstellung zurück in der es wieder bündig mit dem Abstreif- und Abweiselement ist.

Die Reinigung des Abstreif- und Abweiselementes von einer gegebenenfalls vorhandenen Schicht aus Erde und Pflanzengut kann auch mittels zinkenartigen Reinigungsorganen erfolgen. Die Reinigungsorgane sind jeweils auf der Getriebegehäuse-Unterseite 1 montiert. Das Organ bewegt sich jeweils entlang der unteren, schrägen Fläche und vor der Vorderkante 10 des Abstreifund Abweiselementes 2 oszillierend hin und her. Figur 10 zeigt eine Lösung bei der das zinkenartige Reinigungselement 21 am hinteren Ende in eine Spiralfeder ausläuft und im Punkt 22 befestigt ist. Der Oszillationsbereich wird durch eine Kulisse 23 begrenzt. Die Bewegung des Reinigungsorganes 21 erfolgt durch die Bodenunebenheiten, die während der Fahrt auf das Organ einwirken und es aus der Ruhelage stossen. Das zinkenartige, federelastische Reinigungselement schwingt durch die auf ihn einwirkenden Kräfte allseitig, wodurch die eventuell aufgebauten Erde- und Pflanzenmassen auch nach oben in den Ueberschnittbereich der Messer gelangen und somit abgebaut werden.

Der Ausführung gemäss Figur 11 liegt derselbe Gedanke zu Grunde. Das zinkenartige Reinigungsorgan 21 ist an einer Schieberstange 25 befestigt, welche in zwei Lagern 26 beweglich gehalten ist. An der Schieberstange 25 sind zwei gegenläufig schräg zur Fahrtrichtung verlaufende Leitbleche 24 montiert. Bodenunebenheiten des Feldes und Stoppeln wirken auf die Leitbleche während der Fahrt ein und bewirken eine unregelmässige Hin- und Herbewegung des Organes 21.

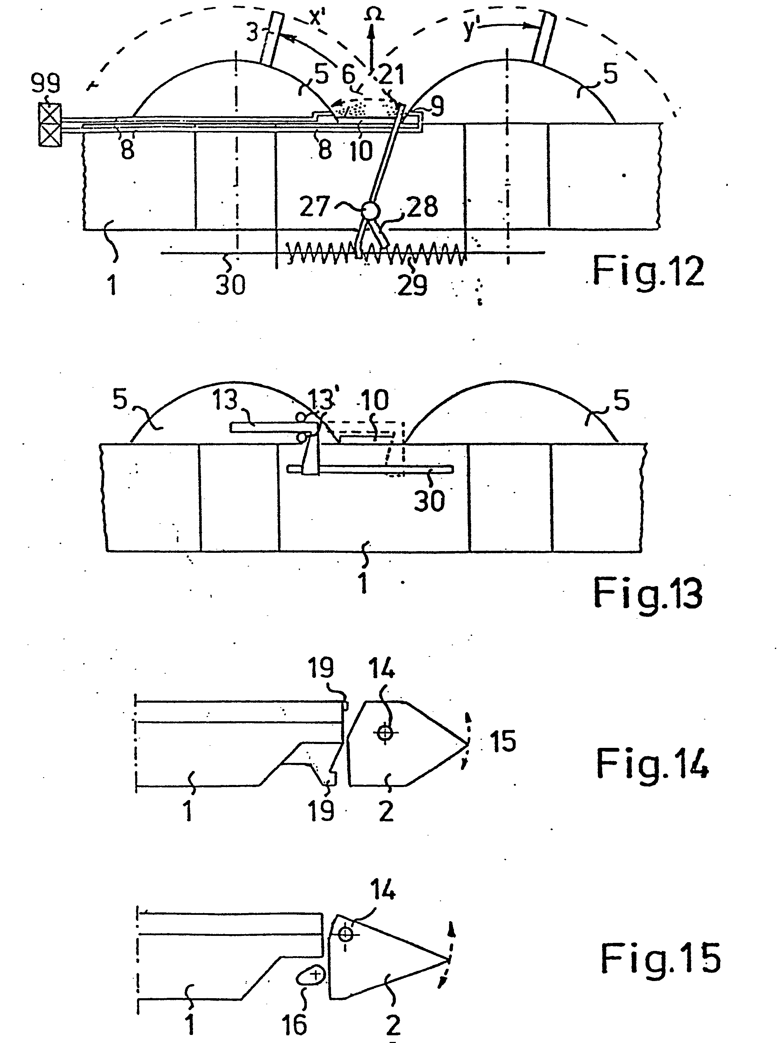

In Figur 12 sind drei Varianten gleichzeitig dargestellt. Wiederum soll das zinkenartige Reinigungsorgan 21 zwischen zwei benachbarten Steinschutzen 5 oszillieren. Hierzu ist das Organ 21 im hinteren Bereich des Getriebegehäuses 1 um eine etwa senkrechte Achse 27 schwenkbar gelagert.

In einer Variante ist die rückwärtige Verlängerung des Organes 21 mit einem Leitblech 28, das zur Längsrichtung des Organes 21 leicht abgewinkelt ist, verbunden. In der zweiten Variante ist die Verlängerung mit einem Antriebsmechanismus aus einer Stange oder einem Drahtzug 30 verbunden und zwischen Rückstellfedern gehalten. Die Bewegung des Drahtzuges oder der Stange kann maschinell oder durch Handbetätigung von der Zugmaschine aus erfolgen.

Die dritte Variante zeigt die Zuführung von Pressluft oder Wasserleitungen 8 und die im Bereich des Steinschutzes eingebauten Austrittsdüsen 9. Die hier austretende Luft, beziehungsweise Wasser reinigt den Ueberschnittbereich vor dem Element 2. Gleichzeitig kann die Menge, der Druck und die Richtung der austretenden Luft beziehungsweise des Wassers, so gesteuert werden, dass der von der Schneidrotoren erzeugte Luftstrom in Richtung Ω, der bei dünnem Wuchs die Pflanzen vor dem Schneiden umlegt, umgelenkt werden, oder unwirksam gemacht werden kann. Ein Steuerorgan 99 gestattet es auch, den Strom des Mediums zu unterbrechen, oder ihn in seiner Intensität zu variieren. Das Medium, das den Reinigungseffekt erzielen soll, kann auch ein Gemisch von Wasser und Luft sein.

Auf ähnliche Art soll gemäss der Ausführung nach Figur 13 ein messerartiges Reinigungsorgan 13 vor der Vorderkante 10 des Abstreif- und Abweiselementes hin und her bewegt werden. Das Organ 13 ist zusätzlich noch einseitig in einem Lager 13' geführt. Die Betätigung der Stange oder des Drahtzuges ist wiederum auf verschiedene Betriebsarten möglich.

Die nachfolgenden Varianten zeigen lauter Beispiele von beweglichen Abstreif- und Abweiselementen. Je nach Variante ist dabei daran gedacht, das Abstreif- und Abweiselement in Schwingung zu versetzen um eine Schicht aus Erde und Pflanzengut abzuschütteln, oder das Element so zu bewegen, dass die aufgebaute Schicht in den Wirkungsbereich der Messer 3 gelangt oder bei der Bewegung nach unten durch die Stoppeln des Feldes abgestreift wird.

Die einfachste Ausführung gemäss Figur 14 sieht lediglich vor, dass das Abstreif- und Abweiselement 2 um eine Achse 14 innerhalb einem gewissen Bereich 15 passiv durch die Schwingungen des Mähers und durch die Unebenheiten des Feldes in Schwingung gerät. Durch Anschläge 19 wird der Schwingungsbereich 15 begrenzt.

Eine Zwangsbewegung des Abstreif- und Abweiselementes 2 wird gemäss Figur 15 durch einen Exzenter 16 dem Abstreif- und Abweiselement 2 aufgezwungen. Der Exzenter wirkt auf die Rückseite des Abstreif- und Abweiselementes 2 und verursacht eine Schwenkbewegung um die Achse 14. Der Exzenter lässt sich entweder über das maschineneigene Getriebe oder durch ein Bodenabtastrad 111 drehen. Der Schwingbereich 15 wird durch die Formgebung der Rückseite des Abstreif- und Abweiselementes 2 begrenzt.

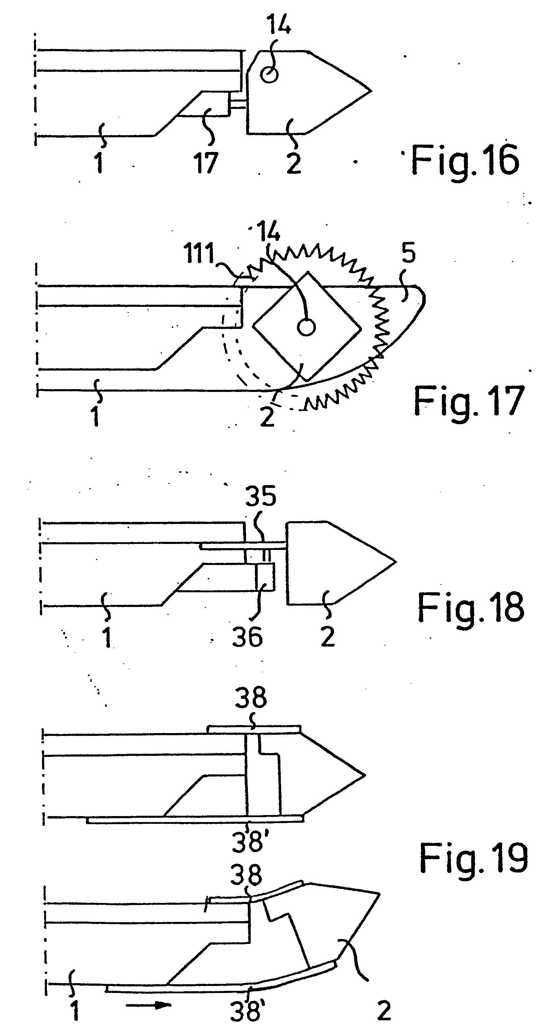

Ersetzt man den Exzenter 16 durch eine Kolben-Zylinder-Einheit 17, so kommt man zur Ausführung gemäss der Figur 16. Statt einer Schwingbewegung lässt sich hier aber auch das Abstreif- und Abweiselement 2 erst um die Achse 14 nach oben bewegen bis die Oberseite durch die Messer der Rotoren und anschliessend nach unten bewegen, bis die Unterseite durch die daran vorbei streifenden Stoppeln gereinigt ist. Die Kolben-Zylinder-Einheit kann auch durch ein elektromechanisches System ersetzt werden, zum Beispiel mit Tauchanker.

Die Drehachse 14 gemäss den vorbeschriebenen Lösungen kann aber auch durch ein Federstahlplättchen 35 etwa so breit wie das Abstreif- und Abweiselement ersetzt werden. Figur 18 zeigt wie das Federstahlplättchen 35 einseitig beispielsweise zwischen zwei Getriebegehäusehälften geklemmt und am Abstreif- und Abweiselement etwa in halber Höhe an dessen Rückseite befestigt werden kann. Eine Kolben-Zylinder-Einheit 36 wirkt hier auf das Federplättchen 35.

Die Beweglichkeit des Abstreif- und Abweiselementes 2 kann auch durch zwei Federstahlplättchen erreicht werden. In Figur 19 ist das obere Stahlplättchen 38 starr am Getriebegehäuse 1 und am Abstreif- und Abweiselement 2 befestigt. Das untere Stahlplättchen 38' lässt sich vorwärts und rückwärts verschieben, wodurch sich das Abstreif- und Abweiselement 2 mit seiner Vorderkante 10 nach aufwärts oder abwärts neigt.

Eine letzte hier dargestellte Variante zeigt Figur 17. Das Abstreif- und Abweiselement 2 weicht dabei in der Form von den bisherigen Abstreif- und Abweiselementen erheblich ab. Bezüglich der Achse 14 ist das Abstreif- und Abweiselement symetrisch gestaltet. Es hat im Prinzip die Form der bisherigen Abstreif- und Abweiselemente, jedoch verläuft es sowohl nach vorne, wie nach hinten keilförmig zu. Durch die Wahl der Neigung der Schrägflächen (45° bezüglich der Horizontalen nach unten und oben) entsteht zum Beispiel ein im Querschnitt quadratisches oder rechteckiges Abstreif- und Abweiselement. Deshalb ist es möglich, das Abstreif- und Abweiselement nicht nur um die Achse 14 oszillieren, sondern vollständig drehen zu lassen. Die Achse kann aber auch durch eine Welle ersetzt werden, welche wiederum von einem Bodenabtastrad 111 getrieben werden kann.

Die Vielzahl der dargestellten Varianten soll nicht als abschliessend betrachtet werden, vielmehr soll dies das breite Spektrum der prinzipiellen Idee dokumentieren.

Die Wirkung des Abstreif- und Abweiselementes kann durch die formliche Aenderung des Steinschutzes verbessert werden.

Werden beispielsweise die zu den Abstreif- und Abweiselementen 2 gerichteten Seitenflächen des Steinschutzes 5 zum Getriebegehäuse 1 hin nach innen gezogen, treffen Unebenheiten besser auf das Abstreifund Abweiselement 2 auf, wodurch dasselbe oder ein dazugehöriges Reinigungsorgan mehr bewegt wird. (Figur 3) Wesentlich ist diese formliche Gestaltung jedoch auch, um eine Brückenbildung durch die Schicht aus Erde und Pflanzengut zu vermeiden. Hierzu ist auch die Form geeignet, bei der die zum Abstreif- und Abweiselement hin gelegenen Seitenflächen des Steinschutzes etwa parallel zur Fahrtrichtung verlaufen.

## Patentansprüche

1. Vorrichtung zum Verhüten eines Verstopfens, beziehungsweise zum Abbau einer Schicht aus Erd- und Pflanzenmassen an einem Scheibenmäher, der ein Getriebegehäuse (1) mit darin angeordnetenm Getriebe für die tellerförmigen Rotoren (4) mit Messern (3) aufweist, wobei an der Vorderseite des Getriebegehäuses Gleitschuhe und Steinschutzelemente (5) vorgesehen sind, und unterhalb der Ebene der rotierenden Messer (3) zwischen den Rotoren (4), im Ueberschnittbereich (6) der Messer, mindestens ein in diesem Bereich angeordnetes keilartiges Abstreif- und Abweiselement (2) angeordnet ist, dadurch gekennzeichnet, dass dem Abstreif- und Abweiselement (2) eine Reinigungsvorrichtung (8, 8', 9, 12, 12', 13, 20, 21, 31) zugeordnet ist, die den vorderen Bereich des Abstreif- und Abweiselementes (2) reinigt, oder dass das Abstreif- und Abweiselement (2) beweglich mit dem Getriebegehäuse (1) verbunden ist.

2. Vorrichtung nach Anspruch 1, dadurch gekennzeichnet, dass das Abstreif- und Abweiselement (2) mindestens eine zum Getriebegehäuse nach hinten oben und eine nach hinten unten geneigte Fläche (60) aufweist.

3. Vorrichtung nach Anspruch 1 oder 2, dadurch gekennzeichnet, dass die Reinigungsvorrichtung hydraulische oder pneumatische Mittel und Druckleitungen (8) umfasst, die in Düsen (9) im Bereich des Abstreif- und Abweiselementes (2) münden.

4. Vorrichtung nach Anspruch 3, dadurch gekennzeichnet, dass die Düsen (9) in den Abstreif- und Abweiselementen (2) angeordnet sind. (Figur 6)

5. Vorrichtung nach Anspruch 3, dadurch gekennzeichnet, dass die Düsen (9) sich im Bereich des Steinschutzes (5) befinden und mit denen Pressluft- und/oder Wasserzuleitungen (8) verbunden sind, und die einen Luft und/oder Wasserstrahl auf die Abstreif- und Abweiselementen (2) richten. (Figur 12)

6. Vorrichtung nach Anspruch 1 oder 2, dadurch gekennzeichnet, dass die Reinigungsvorrichtung Druckleitungen (8) umfasst, die hydraulische oder pneumatische Mittel führen, die aus dem Element (2) herausschiebbare Kolben (20), betätigen. (Figur 8)

7. Vorrichtung nach Anspruch 6, dadurch gekennzeichnet, dass die Kolben (20) auf Leisten (21) wirken, die aus dem Abstreif- und Abweiselement (2) herausschiebbar sind. (Figur 8)

8. Vorrichtung nach Anspruch 1 oder 2, dadurch gekennzeichnet, dass die Reinigungsvorrichtung aus einem bezüglich dem Abstreif- und Abweiselement (2) beweglichen Reinigungsorgan (12, 12', 13, 21, 31) besteht. (Figur 7,9,12,13)

9. Vorrichtung nach Anspruch 8, dadurch gekennzeichnet, dass mindestens eine Fläche des Abstreif- und Abweiselementes (2) von einem beweglichen Reinigungsorgan mindestens teilweise abgedeckt ist. (Figur 7, 9)

10. Vorrichtung nach Anspruch 9, dadurch gekennzeichnet, dass beide Flächen (60) des keilartigen Abstreif- und Abweiselementes (2) mindestens teilweise von einem beweglichen, winkelförmigen Reinigungsorgan (12) abgedeckt sind. (Figur 7)

11. Vorrichtung nach Anspruch 9, dadurch gekennzeichnet, dass die obere Fläche mindestens teilweise von einem auf dem Abstreif- und Abweiselement (2) montierten, beweglichen Reinigungsorgan (12') abgedeckt ist. (Figur 7)

12. Vorrichtung nach Anspruch 9, dadurch gekennzeichnet, dass die untere Fläche bogenförmig gerundet ist und durch ein etwa gleich dieser Fläche geformtes, bewegliches Reinigungsorgan (31) abgedeckt ist, das um die geometrische Achse einer Welle (32) schwenken kann. (Figur 9)

13. Vorrichtung nach Anspruch 8, dadurch gekennzeichnet, dass die Reinigungsvorrichtung von einem am Getriebegehäuse (1) zwischen zwei benachbarten Steinschutzelementen (5) schwingendes zinkenartiges Reinigungsorgan (21) gebildet ist. (Figur 10)

14. Vorrichtung nach Anspruch 13, dadurch gekennzeichnet, dass das zinkenartige Reinigungsorgan (21) zum Anlenkpunkt in eine Spiralfeder (22) endet und im vorderen, oszillierend bewegten Bereich in einer am Getriebegehäuse (1) befestigten Kulisse (23) geführt ist. (Figur 10)

15. Vorrichtung nach Anspruch 13, dadurch gekennzeichnet, dass das zinkenartige Reinigungsorgan (21) an einer Schieberstange (25) angelenkt ist, die in Lagern (26) am Getriebegehäuse (1) gelagert ist, und dass an der Schieberstange Leitbleche (24) in einem zur Fahrtrichtung geneigten Winkel angeordnet sind. (Figur 11)

16. Vorrichtung nach Anspruch 13, dadurch gekennzeichnet, dass das zinkenartige Reinigungsorgan (21) am Getriebegehäuse (1) schwenkbar gelagert ist, und dass am hinteren über den Drehpunkt (27) hinaus verlängerten Ende ein Leitblech (28) angeordnet ist. (Figur 12)

17. Vorrichtung nach Anspruch 13, dadurch gekennzeichnet, dass das zinkenartige Reinigungsorgan (21) am Getriebegehäuse (1) schwenkbar gelagert ist, und dass das Organ (21) über den Drehpunkt (27) hinaus nach hinten verlängert und mit einem betätigbaren Schieber (29, 30) verbunden ist. (Figur 12)

18. Vorrichtung nach Anspruch 8, dadurch gekennzeichnet, dass das Reinigungsorgan (13) sich in Ruhelage im Bereich des Steinschutzes (5) befindet und durch mechanische, hydraulische oder pneumatische Betätigungsmittel vor das Abstreif- und Abweiselement (2) hin und her bringbar ist. (Figur 13)

19. Vorrichtung nach Anspruch 1 oder 2, dadurch gekennzeichnet, dass das Abstreif- und Abweiselement (2) mindestens zweiseitig keilförmig ausgebildet und auf einer Welle (14) drehbar gelagert ist. (Figur 17)

20. Vorrichtung nach Anspruch 19, dadurch gekennzeichnet, dass die Welle (14) durch ein Bodenabtastrad (111) getrieben ist. (Figur 17)

21. Vorrichtung nach Anspruch 1 oder 2, dadurch gekennzeichnet, dass das Abstreif- und Abweiselement (2) um eine Schwenkachse (14) innerhalb einem Schwenkbereich (15) beweglich ist. (Figur 14)

22. Vorrichtung nach Anspruch 21, dadurch gekennzeichnet, dass der Schwenkbereich (15) des Abstreif- und Abweiselementes (2) durch zwei Anschläge (19) am Getriebegehäuse (1) begrenzt ist. (Figur 14)

23. Vorrichtung nach Anspruch 21 oder 22, dadurch gekennzeichnet, dass das Abstreif- und Abweiselement (2) durch einen getriebenen Exzenter (16), welcher auf das Element (2) von aussen einwirkt, im Schwenkbereich (15) bewegt wird. (Figur 15)

24. Vorrichtung nach Anspruch 21 oder 22, dadurch gekennzeichnet, dass das Abstreif- und Abweiselement (2) durch einen mechanisch, hydraulischen, pneumatischen oder elektromagnetischen beaufschlagten Kolben (17) im Schwenkbereich (15) bewegbar ist. (Figur 16)

25. Vorrichtung nach Anspruch 1 oder 2, dadurch gekennzeichnet, dass das Abstreif- und Abweiselement (2) federelastisch mit dem Getriebegehäuse (1) verbunden ist.

26. Vorrichtung nach Anspruch 25, dadurch gekennzeichnet, dass das Abstreif- und Abweiselement (2) mit einer Federstahlplatte (35) mit dem Getriebegehäuse (1) verbunden ist, auf welche Platte ein mechanisches, pneumatisches, hydraulisches oder elektromagnetisches Hubelement (36) einwirkt. (Figur 18)

27. Vorrichtung nach Anspruch 25, dadurch gekennzeichnet, dass das Abstreif- und Abweiselement (2) mittels zwei Federstahlplatten(38, 38') unten und oben mit dem Getriebegehäuse (1) verbunden ist, wobei mindestens eine Federstahlplatte (38') in Fahrtrichtung hin und her beweglich ist, wodurch die Spitze des Abweiselementes (2) innerhalb eines Schwenkbereiches auf und nieder bewegt werden kann. (Figur 19)

28. Vorrichtung nach den Ansprüchen 3 bis 6, 18, 24 und 26, dadurch gekennzeichnet, dass die Pressluft- und/oder hydraulische Zuleitungen (8) mit einem Steuerorgan (99) in Wirkverbindung stehen. (Figur 12)

29. Vorrichtung nach einem der vorhergehenden Ansprüchen, dadurch gekennzeichnet, dass ein mechanisch betätigtes Reinigungsorgan mit einem pneumatischen und/oder hydraulischen Reinigungssystem (8, 9) zusammenwirkt.

30. Vorrichtung nach einem der vorhergehenden Ansprüchen, dadurch gekennzeichnet, dass die zu den Abstreif- und Abweiselementen (2) gerichteten Seitenflächen (u) des Steinschutzes (5) in Draufsicht etwa parallel zur Fahrtrichtung verlaufen. (Figur 3)

31. Vorrichtung nach Anspruch 1-30, dadurch gekennzeichnet, dass die zu den Abstreif- und Abweiselementen (2) gerichteten Seitenflächen (v) des Steinschutzes (5) in Draufsicht zum Getriebegehäuse (1) hin nach innen gezogen sind. (Figur 3)

**Claims**

1. Device for preventing the clogging of, or for removing quantities of soil and plant material on a disc mower comprising a gearbox (1) in which is housed a transmission for the plate shaped rotors (4) fitted with knives (3) and at the front of which are fitted skids and guarding elements (5) and at least one scraping and guiding element ( 2) in the shape of a wedge fixed under the level of the rotary knives (3) between the rotors (4) in the area of overlap (6) of the knives, characterised by the fact that a cleaning device (8, 8', 9, 12, 12', 13, 20, 21, 31) is adjoined to the scraping and guiding element (2) and cleans the front part of the scraping and guiding element (2), or that the scraping and guiding element (2) is connected to the gearbox (1) in such a manner as to be mobile.

2. Device according to Claim 1, characterised by the fact that the scraping and guiding element (2) has at least one surface (60) facing towards the gearbox (1) and inclined towards the rear and the top and one surface (60) facing towards the gearbox ( 1) and inclined towards the rear and the bottom.

3. Device according to Claim 1 or 2, characterised by the fact that the cleaning device consists of hydraulic or pneumatic fluids and conduits (8) which open into nozzle noses (9) in the area of the scraping and guiding element (2).

4. Device according to Claim 3, characterised by the fact that the nozzle noses (9) are located in the scraping and guiding element (2). (Fig. 6)

5. Device according to Claim 3, characterised by the fact that the nozzle noses (9) with which are connected the conduits of air and/or of water (8) are situated in the neighbouring area of the guard (5) and guide a jet of air and/or of water on the scraping and guiding element (2). (Fig. 12)

6. Device according to Claim 1 or 2, characterised by the fact that the cleaning device comprises conduits (8) which convey hydraulic or pneumatic fluids driving moving pistons (20) in order to drive them out of the element (2). (Fig. 8)

7. Device according to Claim 6, characterised by the fact that the pistons (20) operate moving rods (21) in order to drive them out of the scraping and guiding element (2). (Fig. 8)

8. Device according to Claim 1 or 2, characterised by the fact that the cleaning device comprises a cleaning element ( 12, 12', 13, 21, 31) mobile with regard to the scraping and guiding element (2). (Figs. 7, 9, 12, 13)

9. Device according to Claim 8, characterised by the fact that at least one surface of the scraping and guiding element (2) is covered, in part at least, by a mobile cleaning element. (Figs. 7, 9)

10. Device according to Claim 9, characterised by the fact that the two surfaces (60) of the wedge shaped scraping and guiding element ( 2) are, in part at least, covered by an angular mobile cleaning element (12). (Fig. 7)

11. Device according to Claim 9, characterised by the fact that the upper surface is at least partially covered by a mobile cleaning element (12') fitted on the scraping and guiding element (2). (Fig. 7)

12. Device according to Claim 9, characterised by the fact that the lower surface is rounded and is covered by a mobile cleaning element (31), which has approximately the same shape as this surface and which can pivote around the geometric axe of a shaft (32). (Fig. 9)

13. Device according to Claim 8, characterised by the fact that the cleaning device comprises a cleaning element in the shape of a tooth ( 21) oscillating near the gearbox (1) between two neighbouring guarding elements (5). (Fig. 10)

14. Device according to Claim 13, characterised by the fact that the cleaning element in the shape of a tooth (21) ends near the point of attachment in a spiral shaped spring (22) and is guided at its oscillating front part in a groove (23) fixed on the gearbox (1). (Fig. 10)

15. Device according to Claim 13, characterised by the fact that the cleaning element (21) in the shape of a tooth is fixed on a sliding rod (25) which is guided near to the gearbox (1) in bearings (26) and that guiding plates (24) are fixed on the sliding rod with an angle in respect to the direction of forward travel. (Fig. 11)

16. Device according to Claim 13, characterised by the fact that the cleaning element (21) in the shape of a tooth is guided in a pivoting manner at the gearbox (1) and that at the extremity extending beyond the pivoting point (27) is fixed a guiding plate (28). (Fig. 12)

17. Device according to Claim 13, characterised by the fact that the cleaning element (21) in the shape of a tooth is guided in a pivoting manner at the gearbox (1) and that the element (21) is extended towards the rear beyond the pivoting point (27) and is connected to a manoeuvrable slide (29, 30). (Fig. 12)

18. Device according to Claim 8, characterised by the fact that in the rest position the cleaning element (13) is situated in the area of the guard (5) and can be lead in one direction or the other in front of the scraping and guiding element (2) by the aid of mechanical, hydraulic or pneumatic means.

19. Device according to Claim 1 or 2, characterised by the fact that the scraping and guiding element (2) is at least on two sides in the shape of a wedge and is guided in rotation on a shaft (14). (Fig. 17)

20. Device according to Claim 19, characterised by the fact that the shaft (14) is driven by a ground control wheel (111). (Fig. 17)

21. Device according to Claim 1 or 2, characterised by the fact that the scraping and guiding element (2) is mobile around a pivoting axe (14) in the interior of a pivoting area (15). (Fig. 14)

22. Device according to Claim 21, characterised by the fact that the pivoting area (15) of the scraping and guiding element (2) is limited by two stops (19) on the gearbox (1). (Fig. 14)

23. Device according to Claim 21 or 22, characterised by the fact that the scraping and guiding element ( 2) is actioned in the pivoting area (15) by a driven eccentric (16) which acts on the outside of element (2). (Fig. 15)

24. Device according to Claim 21 or 22, characterised by the fact that the scraping and guiding element ( 2) is displaceable in the pivoting area (15) by the means of a piston (17) driven mechanically, hydraulically, pneumatically or electromagnetically. (Fig. 16)

25. Device according to Claim 1 or 2, characterised by the fact that the scraping and guiding element ( 2) is elastically connected to the gearbox (1).

26. Device according to Claim 25, characterised by the fact that the scraping and guiding element (2) is connected to the gearbox (1) with a spring steel blade (35), on which a levering element (36) acts mechanically, pneumatically, hydraulically or electromagnetically. (Fig. 18)

27. Device according to Claim 25, characterised by the fact that the scraping and guiding element (2) is connected at the bottom and at the top of the gearbox (1) by means of two spring steel blades (38, 38') of which at least one (38') is mobile in one direction or the other in the working direction, in such a way that the point of the element (2) can be displaced from high to low in a pivoting area. (Fig. 19)

28. Device according to Claims 3 to 6, 18, 24 and 26, characterised by the fact that the air and/or hydralulic conduits (8) are coupled with a control device (99). (Fig. 12)

29. Device according to anyone of the preceding Claims, characterised by the fact that a mechanically actioned cleaning element acts jointly with a pneumatic and/or hydraulic cleaning system (8,9).

30. Device according to anyone of the preceding Claims, characterised by the fact that the lateral surfaces (u) of the guard (5) facing towards the scraping and guiding elements (2) extend when seen from above approximately parallel to the forward direction. (Fig. 3)

31. Device according to Claims 1 to 30, characterised by the fact that the lateral surfaces (v) of the guard (5) facing towards the scraping and guiding elements (2) extend when seen from above towards the interior in direction of the gearbox (1). (Fig. 3)

**Revendications**

1. Dispositif destiné à empêcher l'accumulation respectivement à enlever une couche de terre et de végétaux sur une faucheuse à disques qui comporte un carter (1) dans lequel est agencé une transmission pour les rotors en forme d'assiettes (4) munis de couteaux (3), et à la partie frontale duquel sont prévus des patins et des éléments protecteurs (5) et au moins un élément de raclage et de guidage (2) en forme de coin fixé sous le niveau des couteaux rotatifs (3) entre les rotors (4) dans la zone de surcoupe (6) des couteaux, caractérisé par le fait qu'un dispositif de nettoyage (8, 8', 9, 12, 12', 13, 20, 21, 31) est adjoint à l'élément de raclage et de guidage (2) qui nettoie la partie avant de l'élément de raclage et de guidage (2) ou que l'élément de raclage et de guidage (2) est lié au carter (1) de façon à être mobile.

2. Dispositif selon la revendication 1, caractérisé par le fait que l'élément de raclage et de guidage (2) présente au moins une surface (60) dirigée vers le carter (1) et inclinée vers l'arrière et vers le haut et une surface (60) dirigée vers le carter (1) et inclinée vers l'arrière et vers le bas.

3. Dispositif selon la revendication 1 ou 2, caractérisé par le fait que le dispositif de nettoyage comporte des fluides hydrauliques ou pneumatiques et des conduites ( 8) qui débouchent dans des buses (9) dans la zone de l'élément de raclage et de guidage (2).

4. Dispositif selon la revendication 3, caractérisé par le fait que les buses (9) sont aménagées dans l'élément de raclage et de guidage (2). (Figure 6)

5. Dispositif selon la revendication 3, caractérisé par le fait que les buses (9) avec lesquelles sont liées des conduites d'air et/ou d'eau ( 8) se trouvent dans le voisinage du protecteur (5) et dirigent un jet d'air et/ou d'eau sur les éléments de raclage et de guidage (2). (Figure 12)

6. Dispositif selon la revendication 1 ou 2, caractérisé par le fait que le dispositif de nettoyage comporte des conduites (8) qui acheminent des fluides hydrauliques ou pneumatiques actionnant des pistons coulissants (20) pour les faire sortir de l'élément (2). (Figure 8)

7. Dispositif selon la revendication 6, caractérisé par le fait que les pistons ( 20) agissent sur des baguettes (21) coulissantes pour les faire sortir de l'élément de raclage et de guidage (2). (Figure 8)

8. Dispositif selon la revendication 1 ou 2, caractérisé par le fait que le dispositif de nettoyage est composé d'un organe de nettoyage (12, 12', 13, 21, 31) mobile par rapport à l'élément de raclage et de guidage (2). (Figures 7, 9, 12, 13)

9. Dispositif selon la revendication 8, caractérisé par le fait qu' au moins une surface de l'élément de raclage et de guidage (2) est couverte, en partie au moins, par un organe de nettoyage mobile. (Figures 7, 9)

10. Dispositif selon la revendication 9, caractérisé par le fait que les deux surfaces (60) de l'élément de raclage et de guidage (2) en forme de coin sont, en partie au moins, couvertes par un organe de nettoyage angulaire mobile (12). (Figure 7)

11. Dispositif selon la revendication 9, caractérisé par le fait que la surface supérieure est au moins partiellement couverte par un organe de nettoyage mobile (12') monté sur l'élément de raclage et de guidage (2). (Figure 7)

12. Dispositif selon la revendication 9, caractérisé par le fait que la surface inférieure est arrondie et est couverte par un organe de nettoyage mobile (31) qui a environ la même forme que cette surface et qui peut pivoter autour de l'axe géométrique d'un arbre (32). (Figure 9)

13. Dispositif selon la revendication 8, caractérisé par le fait que le dispositif de nettoyage est constitué par un organe de nettoyage en forme de dent (21) oscillant près du carter (1) entre deux éléments protecteurs (5) voisins. (Figure 10)

14. Dispositif selon la revendication 13, caractérisé par le fait que l'organe de nettoyage en forme de dent (21) se termine près du point d'accrochage en un ressort en forme de spirale (22) et est guidé dans la partie avant oscillante dans une coulisse (23) fixée sur le carter (1). (Figure 10)

15. Dispositif selon la revendication 13, caractérisé par le fait que l'organe de nettoyage (21) en forme de dent est fixé sur une tige coulissante (25) qui est guidée près du carter (1) dans des paliers (26), et que des tôles de guidage (24) sont fixées sur la tige coulissante avec un angle par rapport à la direction d'avance. (Figure 11)

16. Dispositif selon la revendication 13, caractérisé par le fait que l'organe de nettoyage ( 21) en forme de dent est guidé de manière pivotante au carter (1), et qu'à l'extrémité prolongée au-delà du point de pivotement ( 27) est fixée une tôle de guidage (28). (Figure 12)

17. Dispositif selon la revendication 13, caractérisé par le fait que l'organe de nettoyage (21) en forme de dent est guidé de manière pivotante au carter (1) et que l'organe (21) est prolongé vers l'arrière au-delà du point de pivotement (27) et est lié à un coulisseau (29, 30) manoeuvrable. (Figure 12)

18. Dispositif selon la revendication 8, caracactérisé par le fait qu'au repos l'organe de nettoyage (13) se trouve dans la zone du protecteur (5) et peut être amené dans un sens et dans l'autre devant l'élément de raclage et de guidage ( 2) par des moyens de commande mécaniques, hydrauliques ou pneumatiques.

19. Dispositif selon la revendication 1 ou 2, caractérisé par le fait que l'élément de raclage et de guidage (2) est au moins sur deux côtés en forme de coin et est guidé en rotation sur un arbre (14). (Figure 17)

20. Dispositif selon la revendication 19, caractérisé par le fait que l'arbre (14) est entraîné par une roue de contrôle du sol (111). (Figure 17)

21. Dispositif selon la revendication 1 ou 2, caractérisé par le fait que l'élément de raclage et de guidage ( 2) est mobile autour d'un axe de pivotement (14) à l'intérieur d'une plage de pivotement (15). (Figure 14)

22. Dispositif selon la revendication 21, caractérisé par le fait que la plage de pivotement (15) de l'élément de raclage et de guidage (2) est limitée par deux butées (19) au carter (1). (Figure 14)

23. Dispositif selon la revendication 21 ou 22, caractérisé par le fait que l'élément de raclage et de guidage ( 2) est actionné dans la plage de pivotement (15) par un excentrique (16) entraîné qui agit sur l'élément (2) de l'extérieur. (Figure 15).

24. Dispositif selon la revendication 21 ou 22, caractérisé par le fait que l'élément de raclage et de guidage ( 2) est déplaçable dans la plage de pivotement (15) par l'action d'un piston (17) actionné mécaniquement, hydrauliquement, pneumatiquement ou électromagnétiquement. (Figure 16)

25. Dispositif selon la revendication 1 ou 2, caractérisé par le fait que l'élément de raclage et de guidage ( 2) est lié élastiquement au carter (1).

26. Dispositif selon la revendication 25, caractérisé par le fait que l'élément de raclage et de guidage ( 2) est lié au carter (1) avec une lame en acier ressort (35), lame sur laquelle agit un élément de levage (36) mécanique, pneumatique, hydraulique ou électromagnétique. (Figure 18)

27. Dispositif selon la revendication 25, caractérisé par le fait que l'élément de raclage et de guidage (2) est lié en-bas et en-haut au carter (1) au moyen de deux lames en acier ressort (38, 38') dont une (38') au moins est mobile dans un sens et dans l'autre dans la direction de travail de sorte que la pointe de l'élément (2) puisse être déplacée de haut en bas dans une plage de pivotement. (Figure 19)

28. Dispositif selon les revendications 3 à 6, 18, 24 et 26, caractérisé par le fait que les conduites (8) d'air comprimé et/ou hydrauliques sont couplées avec un organe de commande (99). (Figure 12)

29. Dispositif selon l'une des revendications précédentes, caractérisé par le falt qu'un organe

de nettoyage actionné mécaniquement agit conjointement avec un système de nettoyage (8, 9) pneumatique et/ou hydraulique.

30. Dispositif selon l'une des revendications précédentes, caractérisé par le fait que les faces latérales (u) du protecteur (5) orientées vers les éléments de raclage et de guidage (2) s'étendent en vue de dessus environ parallèlement à la direction d'avancement. (Figure 3)

31. Dispositif selon les revendications 1-30, caractérisé par le fait que les faces latérales (v) du protecteur (5) orientées vers les éléments de raclage et de guidage (2) sétendent en vue de dessus vers l'intérieur en direction du carter (1). (Figure 3)

103
101
105
3
4
1
104
102

Fig.1

105
4
3
1
6
6

Fig. 2

5
5
6
2
6
1
5'
5'
5'
6
2
u
u
v
v
u
u
v
v

Fig. 3

Fig. 3a

Fig. 3b

Fig.4
3
5
5'
1
2
60

Fig.5
4
3
5
10
5'
1
2
Fig.6
3
10
7
1
8
8'
9
2

Fig.7
12'
5
2
12

20
21
Fig. 8
1
8
2
32
2
34
Fig. 9
1
33
31
5
21
5
2
23
22
1
Fig. 10
5
21
5
2
1
26
24
25
Fig. 11

Ω
x'
y'
3
99
5
6
21
5
9
8
8
10
27
28
1
30
29

Fig.12

5
13
13'
10
5
30
1

Fig.13

19
14
15
1
19
2

Fig.14

14
1
16
2

Fig.15

14
1
17
2

Fig.16

14
111
5
1
2

Fig. 17

35
1
36
2

Fig.18

38
38'
38
1
38'
2

Fig. 19